# EUROPÄISCHE PATENTANMELDUNG

(11) **EP 1 111 424 A1**
(43) Veröffentlichungstag der Anmeldung: **27.06.2001**
(21) Anmeldenummer: 00126984.4
(22) Anmeldetag: 08.12.2000
(51) Int. Cl.: G02B 6/44

(54) **Dielektrisches Kabel**

(30) Priorität: 22.12.1999 DE 19962236
(71) Anmelder: SCC Special Communication Cables GmbH & Co. KG, 81379 München (DE)
(72) Erfinder: Schmidt, Ilona, Dr., 96472 Rödental (DE)
(74) Vertreter: Fischer, Volker, Dipl.-Ing.

(57) **Zusammenfassung**

Ein dielektrisches Nachrichtenkabel (CA1) weist mindestens eine dielektrische Folie (MF1) auf, auf und/oder in der zur Kabelortung mindestens eine Schicht (MS1) aus einem magnetischen Werkstoff vorgesehen ist, wobei dieser magnetische Werkstoff ebenfalls weitgehend dielektrisch ausgebildet ist.

## Beschreibung

Die Erfindung betrifft ein dielektrisches Nachrichtenkabel mit mindestens einem ortbaren Kabelelement entlang seiner Längserstreckung.

In der Praxis kann die Ortung sogenannter dielektrischer Nachrichtenkabel erschwert sein. Dies sind z.B. optische Nachrichtenkabel, die im wesentlichen metallfrei aufgebaut sind. Die Lokalisierung solcher Kabel in der Erde oder in Kabelschächten, Kunststoff-Röhren oder dergleichen ist dann nur schwierig oder gar nicht nicht möglich.

Der Erfindung liegt die Aufgabe zugrunde, ein dielektrisches Nachrichtenkabel bereitzustellen, das entlang seiner Längserstreckung in einfacher und zuverlässiger Weise ortbar ist. Diese Aufgabe wird bei einem dielektrischen Nachrichtenkabel der eingangs genannten Art dadurch gelöst, daß das ortbare Kabelelement durch eine dielektrische Folie gebildet ist, die zur Kabelortung mindestens eine Schicht aus einem magnetischen Werkstoff aufweist, und daß dieser magnetische Werkstoff ebenfalls weitgehend dielektrisch ausgebildet ist.

Dadurch, das als ortbares Kabelelement eine dielektrische Folie mit mindestens einer Schicht aus einem magnetischen Werkstoff verwendet ist, der selbst weitgehend dielektrisch ausgebildet ist, bleibt das Nachrichtenkabel insgesamt im wesentlichen dielektrisch. Trotzdem ist durch den magnetischen Werkstoff der dielektrischen Folie eine weitgehend zuverlässige Lokalisierung des Nachrichtenkabels entlang seiner Längserstreckung ermöglicht. Die Verwendung von Folien ermöglicht zudem einen effizienten Produktionsablauf.

Die natürlichen Eigenschaften der Kabel bleiben in vorteilhafter Weise weitgehend unverändert. Dielektrische Nachrichtenkabel sind insbesondere weitgehend unempfindlich gegen elektromagnetische Einflüsse und Nebensprechen.

Sonstige Weiterbildungen der Erfindung sind in den Unteransprüchen wiedergegeben.

Die Erfindung und ihre Weiterbildung werden nachfolgend anhand von Zeichnungen näher erläuter. Es zeigen:
- Figur 1: schematisch im Querschnitt ein erstes Ausführungsbeispiel eines erfindungsgemäßen, dielektrischen Nachrichtenkabels,
- Figuren 2,3: jeweils schematisch im Querschnitt zwei verschiedene dielektrische Folien als ortbare Kabelelemente für ein dielektrisches Nachrichtenkabel wie z.B. nach Figur 1, und
- Figur 4: in schematischer Querschnittsdarstellung ein weiteres Ausführungsbeispiel eines erfindungsgemäßen dielektrischen Nachrichtenkabels.

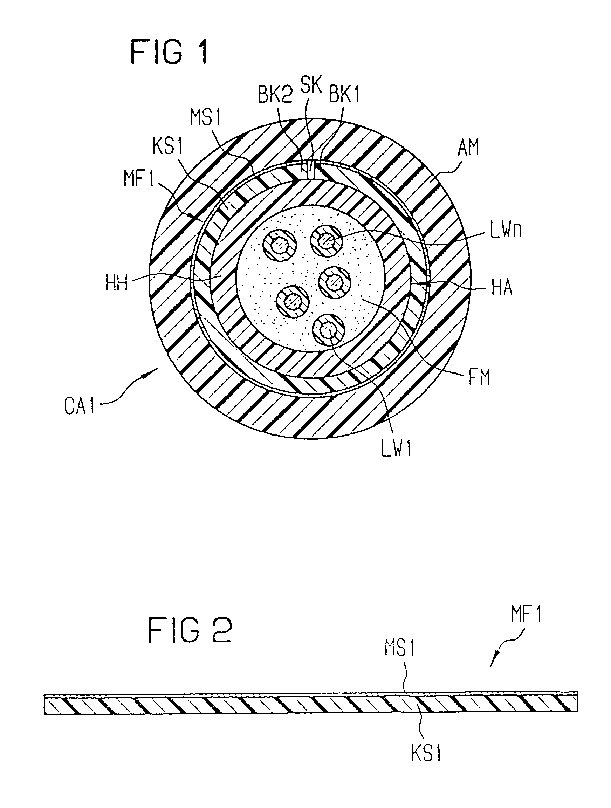

Elemente mit gleicher Funktion und Wirkungsweise sind in den Figuren 1 mit 4 jeweils mit denselben Bezugszeichen versehen.

Figur 1 zeigt in schematischer Querschnittsdarstellung ein optisches Nachrichtenkabel CA1. Dieses weist in seiner Kabelseele als optisches Übertragungselement eine optische Hohlader HA auf, die im wesentlichen zentral bezüglich der darüber angeordneten, übrigen Elemente des Nachrichtenkabels angeordnet ist. Die Hohlader HA ist durch ein etwa kreiszylinderförmiges Kunststoffröhrchen gebildet, in dessem Inneren ein oder mehrere Lichtwellenleiter LW1 mit LWn eingelegt sind. Die Lichtwellenleiter LW1 mit LWn sind vorzugsweise mit radialem Freiraum in diese Kammer eingebracht, um für sie Ausgleichsbewegungen z.B. bei etwaigen Zug-, Biege-, oder Stauchbeanspruchungen zu ermöglichen. Gegebenenfalls kann es zweckmäßig sein, die vom Kunststoffröhrchen KH eingeschlossene, im Querschnitt etwa kreisrunde Kammer der optischen Hohlader HA zusätzlich mit der Füllmasse anzufüllen. In der Figur 1 ist die Kammer der optischen Hohlader HA zusätzlich mit der Füllmasse FM ausgefüllt. Die Füllmasse FM weist in vorteilhafter Weise eine etwa pastenförmige, weiche Konsistenz auf, die gewisse Ausgleichs- oder Bewegungsvorgänge des jeweiligen Lichtwellenleiters zuläßt. Insbesondere können auch thixotropierte Füllmassen eingesetzt werden, um für den jeweiligen Lichtwellenleiter eine Sperre gegen OH-Gruppendifusion, d.h. eine Wasserdampfsperre bereitstellen zu können. Dafür kann es auch zweckmäßig sein, öl- oder fetthaltige Füllmasse vorzusehen. Auf diese Weise kann die optische Hohlader HA insbesondere auch weitgehend längswasserdicht gemacht werden. Daneben übernimmt die Füllmasse FM in vorteilhafter Weise auch eine Polsterfunktion für den jeweiligen Lichtwellenleiter. Gegebenenfalls ist es auch möglich, eine sehr weiche Polsterschicht, beispielsweise einen stark verschäumten, hoch elastischen Kunststoff als Füllmasse vorzusehen. Weiterhin kann es zweckmäßig sein, der Füllmasse ein Quellmittel beizumengen oder dieses allein als Füllmasse vorzusehen. Zweckmäßigerweise wird die Füllmasse FM und die jeweilig in sie eingebetteten Lichtwellenleiter LW1 mit LWn fugenlos dicht von der Außenhülle HH umschlossen.

Auf der Außenhülle HH des optischen Übertragungselements HA sitzt unmittelbar eine dielektrische Folie MF1 in Form eines ringsum weitgehend geschlossenen Schlauches auf. Diese Folie MF1 bildet also räumlich betrachtet ein Längsrohr, das sich entlang der Längsausdehnung des optischen Übertragungselements HA erstreckt. Es schließt den Außenumfang des optischen Übertragungselements HA nahezu ringsum ein. Seine Bandkanten BK1, BK2 sind zweckmäßigerweise möglichst bündig aneinanderstoßend angeordnet, d.h. ihre Stirnflächen kontaktieren möglichst miteinander. Die beiden Bandkanten verlaufen dabei im wesentlichen geradlinig sowie weitgehend parallel zur Zentralachse des Nachrichtenkabels. In vorteilhafter Weise sind die beiden Bandkanten z.B. unter zu Hilfenahme eines Schmelzklebers miteinander verklebt, so daß ein etwaiger Längsspalt SK zwischen den beiden Bandkanten BK1, BK2 weitgehend mit Klebemittel ausgefüllt ist. Die dielektrische Folie MF1 bildet somit im Querschnitt betrachtet eine im wesentlichen kreisringförmige Hülle, d.h. räumlich betrachtet eine im wesentlichen kreiszylinderförmige Umhüllung um den Außenmantel HH des optischen Übertragungselements HA.

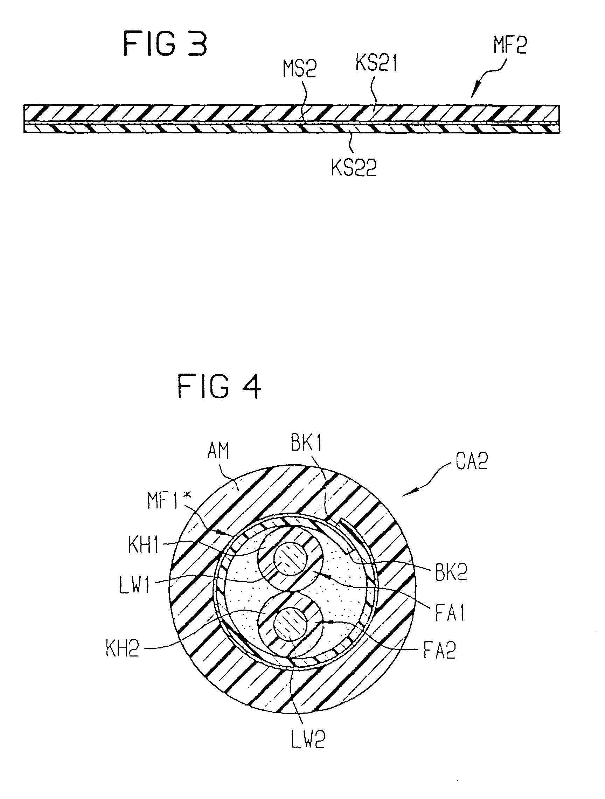

Die dielektrische Folie MF1 weist mindestens eine Schicht aus einem magnetischen Werkstoff auf, der ebenfalls weitgehend dielektrisch ausgebildet ist, um das optische Nachrichtenkabel CA1 entlang seiner Längserstreckung ortbar, d.h. lokalisierbar zu machen. In der Figur 1 weist die dielektrische Folie MF1 eine Kunststoffträgerschicht KS1 auf, auf der eine Schicht MF1 aus einem magnetischen Werkstoff aufgebracht ist. Mit dieser magnetischen Schicht MF1 ist die dielektrische Folie MF1 in der Figur 1 nach außen gewendet auf den Außenmantel HH des optischen Übertragungselements HA aufgebracht. Die Figur 2 zeigt korrespondierend dazu die dielektrische Folie MF1 im plan ausgelegten Zustand vor ihrem Herumwickeln bzw. Aufbringen auf die Außenoberfläche des kreiszylinderförmigen, optischen Übertragungselements HA.

Die Schicht MS1 aus magnetischem Werkstoff kann beispielsweise durch magnetische Partikel gebildet sein, die auf die Kunststoffträgerschicht KS1 haftend aufgetragen worden sind. Zweckmäßig kann es gegebenenfalls auch sein, die magnetische Schicht zwischen zwei Kunststoff-Deckschichten einzuhüllen bzw. einzulagern ("Sandwichbauweise"). Weiterhin kann es auch zweckmäßig sein, magnetische Teilchen als Pulver antistatisch auf eine Kunststofträgerfolie aufzutragen, auf deren Oberfläche aufzukleben, die magnetische Schicht zu extrudieren oder auf eine Trägerschicht aufzusprühen.

Als magnetischer Werkstoff eignen sich vorzugsweise Ferrite, insbesondere Bariumferrit. Daneben können auch andere Ferrite, wie sie z.B. aus der Magnetbandindustrie bekannt sind, verwendet sein. Damit das jeweilige Nachrichtenkabel weitgehend dielektrisch ausgebildet ist, ist für den magnetischen Werkstoff zweckmäßigerweise eine spezifische Leitfähigkeit von höchstens 1000 S/cm, insbesondere zwischen 200 und 500 S/cm gewählt. Für die Kunststoffträgerfolie KS1 der dielektrischen Folie MF1 ist vorzugsweise ein Elastomer, insbesondere Polyethylen, Polypropylen, Polyurethan, oder dergleichen gewählt.

Neben Bariumferrit können insbesondere auch alle anderen magnetischen Stoffe, wie z.B. mit Neodym (Nd), oder Cobalt-dotierte Stoffe verwendet werden. Auf alle diese Stoffe, die magnetisches Verhalten aufweisen, spricht ein entsprechender Detektor an.

Als Kunststoffmaterial für die Kunststoffschicht der jeweiligen dielektrischen Folie eignen sich insbesondere Kunststoffe auf Basis von Polyester (wie Hestaphen), Polyethylen (PE), Ethylenvinylacetat, Polymere und Copolymere (EVA), Polyurethan (PUR).

Figur 3 zeigt eine dielektrische Folie MF2, die gegenüber der dielektrischen Folie MF1 von Figur 2 abgewandelt ist. Die dielektrische Folie MF2 weist jetzt zwischen zwei Lagen von Kunststoffschichten KS21, KS22 eine Schicht MS2 aus magnetischem Material auf. Diese drei Schichten KS21, KS22 sowie MS2 sind vorzugsweise miteinander verschweißt. Da die magnetische Schicht MS2 beidseitig durch je eine Kunststoffträgerschicht KS21, KS22 abgedeckt ist, sind unerwünschte Abriebe der magnetischen Partikel beim Herstellen, Verlegen sowie Gebrauch des Nachrichtenkabels weitgehend vermieden. Denn die magnetische Schicht MS2 ist zwischen den beiden Kunststoffschichten KS21, KS22 eingebettet, so daß Abrasionen des magnetischen Stoffes weitgehend vermieden sind.

Zusammenfassend betrachtet weist die ortbare, dielektrische Folie mindestens eine Kunststoffträgerschicht auf, auf der und/oder in der mindestens eine Schicht aus dem magnetischen Werkstoff vorgesehen ist. Die erfindungsgemäße dielektrische Folie weist den Vorteil auf, das sie bereits vorgefertigt auf Vorrat gehalten und bei Bedarf um die jeweilige Kabelseele herumgewickelt oder als Längsrohr längseinlaufend auf die jeweilige Kabelseele aufgebracht werden kann. Würden hingegen magnetische Partikel in das Kunststoffpolymermaterial des Kabelmantels bei dessen Extrusion miteingebracht, so könnten bei einer solchen Extrusion unzulässig hohe abrasive Kräfte auftreten, die zu einem unzulässig hohen Werkzeugverschleiß oder zu intolerablen Extrusionsgeschwindigkeiten führen würden. Denn die magnetischen Partikel würden bei der Extrusion des Kunststoffmaterials in der Regel nicht mit aufgeschmolzen werden und somit als harte Bestandteile im zähflüssig gemachten Kunststoffmaterial verbleiben. Außerdem könnten die magnetischen Eigenschaften dieser Partikel durch deren Aufheizung bei der Extrusion des Kunststoffmaterials gegebenenfalls beeinträchtigt werden oder ganz verloren gehen.

Außen um die mit der dielektrischen Folie MF1 umgebene Hohlader HA ist schließlich ein ein- oder mehrschichtiger Kunststoffaußenmantel AM aufgebracht. Gegegebenenfalls kann es auch zweckmäßig sein, in und/oder unterhalb diesem ein oder mehrere zugfeste Elemente wie z.B. Aramidgarne oder glasfaserverstärkte Kunststoffäden vorzusehen. Solche zugfesten Kabelelemente sind in der Figur 1 der zeichnerischen Einfachheit halber weggelassen worden.

Figur 4 zeigt in schematischer Querschnittsdarstellung ein weiteres optisches Nachrichtenkabel CA2. Dessen Kabelseele ist durch zwei Lichtwellenleiter-Festadern FA1, FA2 gebildet. Die jeweilige Festader FA1 bzw. FA2 weist in ihrem Zentrum jeweils einen Lichtwellenleiter LW1 bzw. LW2 auf, auf dem außen ringsum eine im wesentlichen kreisringförmige Kunststoffschicht KH1 bzw. KH2 zum mechanischen Schutz direkt fest aufsitzt. Die beiden Festadern FA1, FA2 sind vorzugsweise miteinander im Gleichschlag verseilt. Dieses Festaderpaar ist in eine dielektrische Folie MF1^{*} eingewickelt, die entsprechend der dielektrischen Folie MF1 von Figur 1 ausgebildet ist. Im Unterschied zu Figur 1 ist jetzt jedoch die dielektrische Folie mit sich überlappenden Bandkanten BK1, BK2 um die beiden Festadern FA1, FA2 herumgeschlagen. Vorzugsweise ist die dielektrische Folie MF1^{*} spiralförmig um das Festaderpaar herumgewickelt bzw. herumgewendelt. Die mit sich überlappenden Bandkanten um das Festaderpaar herumgewickelte, dielektrische Folie MFl* bildet somit in erster Näherung einen etwa kreiszylinderförmigen Schlauch, der im Querschnitt betrachtet jeweils an zwei einander gegenüberliegenden Auflagepunkten das Festaderpaar kontaktiert. Außen ringsum das derart bewickelte Festaderpaar ist schließlich ein Kunststoffaußenmantel üblichen Aufbaus als konusförmige Ummantelung aufgebracht.

Allgemein betrachtet kann die mit mindestens einer erfindungsgemäßen dielektrischen Folie einzuwickelnde Kabelseele vorzugsweise durch eine optische Hohlader, die mit einer Vielzahl einzelner Lichtwellenleiter, Lichtwellenleiterbändchen oder Lichtwellenleiterbändchenstapel belegt sein kann, mindestens einer optischen Festader sowie durch ein sonstiges optisches Übertragungselement gebildet sein.

Die erfindungsgemäße dielektrische Folie kann insbesondere auf sogenannten optischen Minibündel, Zentralrohren oder gebündelten Festadern aufgebracht sein. Durch das Einbringen mindestens einer dielektrischen Folie im Kabelaufbau ist es in vorteilhafter Weise ermöglicht, Lichtwellenleiter-Nachrichtenkabel in Kunststoff-Röhren oder in der Erde zu orten bzw. zu detektieren. Dazu ist eine solche Folie zweckmäßigerweise entlang der gesamten Längserstreckung des jeweiligen Nachrichtenkabels um dessen Kabelseele aufgebracht. Gegebenenfalls kann das ortbare Kabelelement mit dem magnetischen Werkstoff auch mit üblichen Methoden extrudiert werden. Auch kann das ortbare Kabelelement unter Umständen in Röhren, wie z.B. Abwasser-Kanälen verlegt werden.

Die magnetische Folie des erfindungsgemäßen dielektrischen Nachrichtenkabels kann vorzugsweise mit Hilfe eines elektrischen Leitungskreises, der besonders empfindlich eingestellt ist, detektiert werden. Dieses elektromagnetische Ansprechverhalten ist insbesondere auch bei gängigen Metallsuchern (z.B. zur Schatzsuche) üblich.

## Patentansprüche

1. Dielektrisches Nachrichtenkabel (CA1) mit mindestens einem ortbaren Kabelelement (MF1) entlang seiner Längserstreckung,
**dadurch gekennzeichnet**,
daß das ortbare Kabelelement durch eine dielektrische Folie (MF1) gebildet ist, die zur Kabelortung mindestens eine Schicht (MS1) aus einem magnetischen Werkstoff aufweist, und daß dieser magnetische Werkstoff ebenfalls weitgehend dielektrisch ausgebildet ist.

2. Dielektrisches Nachrichtenkabel nach Anspruch 1,
**dadurch gekennzeichnet**,
daß der magnetische Werkstoff durch Ferrite, insbesondere Bariumferrit, gebildet ist.

3. Dielektrisches Nachrichtenkabel nach einem der vorhergehenden Ansprüche,
**dadurch gekennzeichnet,**
daß die dielektrische Folie (MF1) eine Kunststoffträgerschicht (KS1) aufweist, auf der und/oder in der mindestens eine Schicht (MS1) aus dem magnetischen Werkstoff vorgesehen ist.

4. Dielektrisches Nachrichtenkabel nach einem der vorher vorhergehenden Ansprüche,
**dadurch gekennzeichnet,**
daß die dielektrische Folie (MF1) als längseinlaufendes Rohr oder als spiralförmige Wendel ringsum eine Kabelseele (HA) aufgebracht ist.

5. Dielektrisches Nachrichtenkabel nach Anspruch 4,
**dadurch gekennzeichnet,**
daß die Kabelseele durch ein optisches Übertragungselement (HA) gebildet ist.

6. Dielektrisches Nachrichtenkabel nach einem der vorhergehenden Ansprüche,
**dadurch gekennzeichnet,**
daß die dielektrische Folie (MF1) entlang der Gesamtlänge einer Kabelseele (HA) auf diese aufgebracht ist.
